# EUROPEAN PATENT SPECIFICATION

(11) **EP 1 909 246 B1**
(45) Date of publication and mention of the grant of the patent: **01.07.2015**
(21) Application number: 07117969.1
(22) Date of filing: 05.10.2007
(51) Int. Cl.: G09B 23/28, G09B 23/30, G09B 23/32, G09B 23/34

(54) **Surgical console operable to simulate surgical procedures**
Chirurgische Konsole zur Simulation chirurgischer Verfahren
Console chirurgicale servant à stimuler des procédures chirurgicales

(30) Priority: 05.10.2006 US 849522 P
(43) Date of publication of application: 09.04.2008
(73) Proprietor: Novartis AG, 4056 Basel (CH)
(72) Inventor: Horvarth, Christopher, Irvine, CA 92604 (US)
(74) Representative: Hanna, Peter William Derek

(56) References cited:
- EP-A- 1 455 324
- US-A1- 2001 020 937

## Description

### TECHNICAL FIELD OF THE INVENTION

The present invention relates generally to surgical console systems, and methods, and more particularly, to a system and method to facilitate simulation of surgical procedures.

### BACKGROUND OF THE INVENTION

During a modem surgery, particularly ophthalmic surgery, a surgeon uses a variety of pneumatic and electronically driven microsurgical hand pieces. The hand pieces are operated by a microprocessor-driven surgical console that receives inputs from the surgeon or an assistant by a variety of peripheral devices, such as foot pedal controllers, infrared remote control devices and menu-driven touch screens. One such microsurgical console is described in U.S. Patent No. 5,455,766 (Scheller, et al.). Surgical consoles allow surgeons to manually input surgical operating parameters and store these "customized" parameters in the console memory for future use. Prior art consoles, however, require that the operating parameters and methodologies be inputted manually using a keypad, touch screen or downloaded from another console that has had the parameters inputted manually.

EP-A-1,455,324 (Melerit AB) describes a simulation-only device for the simulation of eye operations, for instance cataract removal. Simulator instruments correspond to the operation instruments. A microscope simulator includes two displays that are viewed by the user through lenses in a similar way to a real surgical microscope. Foot controls and microscope and instrument controls are connected to a computer provided with required software to simulate real instrument functions, as for instance a lengthwise vibration of a needle. A training session can be stored for later evaluation.

The human eye can suffer a number of maladies causing mild deterioration to complete loss of vision. While contact lenses and eyeglasses can compensate for some ailments, ophthalmic surgery is required for others. Generally, ophthalmic surgery is classified into posterior segment procedures, such as vitreoretinal surgery, and anterior segment procedures, such as cataract surgery. More recently, combined anterior and posterior segment procedures have been developed.

The surgical instrumentation used for ophthalmic surgery can be specialized for anterior segment procedures or posterior segment procedures or support both. In any case, the surgical instrumentation often requires the use of associated consumables such as surgical cassettes, fluid bags, tubing, hand piece tips and so on. In some cases, a surgical console may house some or all of the associated surgical instrumentation and consumables and may provide a centralized system for monitoring and/or controlling the same.

The setup and operation of an ophthalmic surgical console can be quite complex, as setting up a surgical instrumentation generally involves various electrical cables and pneumatic/fluidic tubing, etc. Various alerts may be associated with the operation of the ophthalmic surgical console. The operator (surgeon) requires a great deal of training to gain broad experience in both performing the procedure and using the surgical instrumentation. In particular, it is difficult for surgeons to gain experience in the handling of complications that may arise during procedures. Training experience is generally limited by the number of cases available within a hospital on which the surgeons can gain surgical experience. This results in an increased risk of complications with surgical procedures and forces the treatment of rare cases to be handled by specialized practitioners.

Therefore, there is a need for a surgical console that can be used to generate realistic surgical situations to enable training of inexperienced surgeons and surgical room personnel.

### SUMMARY OF THE INVENTION

Embodiments of the present invention meet this need and others by providing a surgical console operable to generate realistic surgical situations and enable trainees to become familiar with the operation of the surgical console and surgical instruments used during complex surgical procedures. Additionally, these training surgical procedures may be varied in order to account for potential complications associated with the various procedures. The embodiments of the present invention allow operators (e.g., surgeons) to become familiar with and gain experience with new surgical instruments and use the surgical training procedures without risk to a patient. The surgical console, in addition to providing simulations, may record the operating parameters during the training surgical procedure such that the surgical procedure may be critiqued and the surgeon's abilities can be assessed objectively.

An embodiment of the present invention provides a surgical console used to facilitate inter-ocular surgery. This surgical console includes a processing module, memory device, user interface, and external peripheral device interface. The processing module is operable to direct the operations of and receive inputs from peripheral devices. These peripheral devices include training surgical instruments, control devices and other devices used during surgery. The processing module may execute simulations of surgical procedures; i.e., training surgical procedures.

During a simulated or training surgical procedure the surgeon may use training surgical instruments having the feel and function of actual surgical instruments. These may include, but should not be limited to, surgical microscopes wherein visual simulations generated by the console of various aspects of the training surgical procedure may be generated and presented to the surgeon through the training surgical microscope. Tactile surgical instruments, such as tools that allow manipulation under various ocular tissues, may be simulated within the field of view of the surgical training microscope, based on the user's manipulation of the surgical training instruments. These may include mechanical devices that manipulate and/or remove solid objects within the vitreous body, a vitrectomy unit wherein the cutting speed, flow or suction of the unit may be simulated and controlled using the surgical module within or coupled to the surgical console, etc. Additionally foot pedals or switches may be used to control these training surgical instruments during the training surgical procedure.

Other embodiments of the present invention may use a surgical console to simulate only parts of the surgical procedure to perform exercises that improve the operator's familiarity with an individual operation of the surgical console. These exercises may be designed to allow the operator to achieve certain operations such as, but not limited to, foot switch settings that are based on actual surgical parameters and simulations. A display within the user interface of the surgical console can provide feedback informing the operator of differences between their actual performance and ideal performance. These differences may be used to evaluate the operator's reaction time and provide guidance and feedback in order to improve the operator's use of the surgical console and associated peripherals.

Other advantages of the present invention will become more apparent to one skilled in the art upon reading and understanding the detailed description of the preferred embodiments described herein with reference to the following drawings.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIG. 1 is a perspective view of one surgical console that may be used with embodiments of the present invention;
FIG. 2 is a functional block diagram of one surgical console in accordance with embodiments of the present invention;
FIG. 3 is a perspective view of one surgical console in accordance with embodiments of the present invention; and
FIG. 4 provides a logic flow diagram associated with one embodiment of the present invention that allows for the training of operators to use the surgical console or attached surgical instruments during a training surgical procedure or exercise.

### DETAILED DESCRIPTION OF THE INVENTION

Preferred embodiments of the present invention are illustrated in the FIGs., like numerals being used to refer to like and corresponding parts of the various drawings.

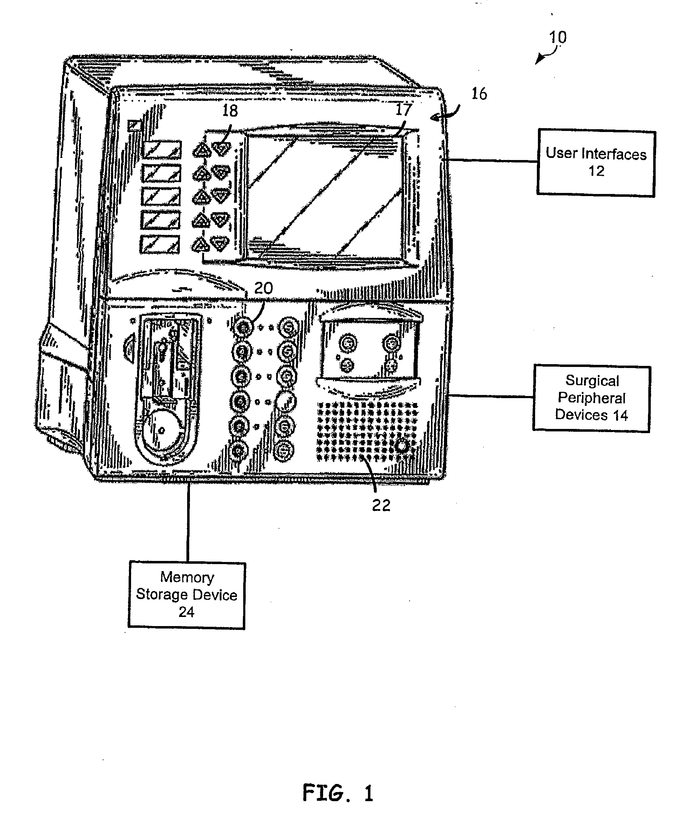

The multimedia playback device provided by embodiments of the present invention may be used with any suitable surgical console such as, but not limited to, the SERIES TWENTY THOUSAND® LEGACY®, the INFINITI®) or the ACCURUS® surgical system consoles, as seen in FIG. 1, all commercially available from Alcon Laboratories, Inc., of Fort Worth, Texas, that may be configured to support the use of training surgical procedures or individual exercises that help improve the operator's proficiency with the surgical console and peripheral devices coupled thereto.

FIG. 1 provides an illustration of a microsurgical console 10 of one embodiment of the present invention. Microsurgical Console 10 may operably couple to a number of user interfaces 12, such as a foot pedal assembly or other push-button type assembly (not shown) and surgical peripheral devices 14. Console 10 allows an operator, such as a surgeon, to begin a surgical procedure by setting the initial operating parameters and modes into the console. This may be done by allowing the operator to interface with the surgical console through user interfaces 12 or other interfaces provided on the front panel 16. These interfaces may include an electronic display screen 17, one or more push-button switches or touch-sensitive pads 18, one or more endless digital potentiometer knobs 20, or other like interfaces known to those skilled in the art. Push-button switches 18 and knobs 20 are actuable by an operator to access various different operating modes and functions used in various surgical parameters. Console 10 may also include the ability to accept storage media such as cassette tapes, memory cards, floppy disks, compact discs (CDs), digital video disks (DVDs), or other like devices known to those skilled in the art.

Electronic display screen 17 may be controlled by a processing module that allows the operator access to one or more different menus or messages which relate to the functions and operations of the various push buttons 18 and knobs 20. In one embodiment the display screen 17 may be divided into display screen regions associated with individual buttons 18 or knobs 20. This arrangement allows for the indicated function of each button 18 or knob 20 to be readily changed. The use of the electronic display screen 17 also permits the buttons 18 and knobs 20 to be labeled in virtually any language.

Microsurgical console 10 may be adapted for use with a number of different surgical instruments (i.e. surgical peripheral devices 14). For example, these may include a fiber optic illumination instrument, a surgical microscope, a vitrectomy unit, a fragmentation emulsification instrument, a cutting instrument, such as a guillotine cutter for vitrectomy procedures, and/or micro-scissors inset for proportionate and multiple cutting. While the above-identified microsurgical instruments are provided for illustrative purposes it should be understood that the microsurgical console 10 can be used with other similar equipped instruments. The surgical console 10 can also be attached to similar training devices that perform these same functions. In such a case, the surgical console 10 can then coordinate a training surgical procedure for the integrated use of the peripheral devices 14 or individual exercises (or games) that focus on specific piece(s) of equipment.

In general, any microsurgical instruments that are actuated or controlled by pneumatic or electronic signals may be operably coupled to and controlled by surgical console 10. This control or actuation may be governed by pneumatic, electronic, optical, or other like signals known to those skilled in the art wherein the signals are generated by surgical console 10. Each of these illustrated microsurgical peripheral devices 14 that couple to surgical console 10 may have different modes of operation that may require different settings or parameters that can be provided by the microsurgical console 10. By saving these operating parameters and surgical modes which are associated with specific steps of a surgical procedure in memory, the setup of the microsurgical peripheral devices 14 is facilitated by eliminating the often tedious or cumbersome process of initializing these devices manually via the surgical console 10 for each step of the surgical procedure.

Embodiments of the present invention facilitate training an operator (e.g., a surgeon) on the operation of a surgical procedure with a simulation that eliminates the risks to a patient. Recorded surgical procedures facilitate pertinent changes to the operating modes and peripheral device operating parameters from surgical console 10 memory to initialize or setup the microsurgical peripheral devices 14 for individual steps within an overall surgical procedure. At the completion of a surgical procedure, the completed surgical procedure may be saved as a recorded procedure in a memory coupled to surgical console 10. It should be noted that within surgical console 10 is a processing module coupled to the memory where the processing module is operable to execute at least some of the steps discussed in the logic flow diagrams herein.

Surgical console 10 is operable to generate realistic surgical situations or appropriate exercises that enable trainees to become familiar with the operation of the surgical console 10 and the surgical instruments used during complex surgical procedures. These training surgical procedures or exercises may be varied in order to account for potential complications associated with the various procedures. In addition to providing simulations, the surgical console 10 may record the operating parameters during the training surgical procedure such that the surgical procedure may be critiqued and the surgeon's abilities can be assessed objectively.

During a simulated or training surgical procedure or exercise the surgeon may use actual or training surgical instruments having the feel and function of actual surgical instruments. This may include, but should not be limited to, surgical microscopes wherein visual simulations generated by the surgical console 10 of various aspects of the training surgical procedure may be generated and presented to the surgeon through the training surgical microscope. Tactile surgical instruments, such as tools that allow manipulation under various ocular tissues, may be simulated within the field of view of the surgical training microscope, based on the user's manipulation of the surgical training instruments. These training instruments may include mechanical devices that manipulate and/or remove solid objects within the vitreous body, and/or a vitrectomy unit wherein the cutting speed, flow or suction of the unit may be simulated and controlled using the surgical module within or coupled to the surgical console 10. Additionally, foot pedals or switches may be used to control these training surgical instruments during the training surgical procedure.

Surgical console 10 may be used to simulate only parts of a surgical procedure to perform exercises that improve the operator's familiarity with an individual operation of the surgical console 10 or surgical instrument. These exercises may be designed to allow the operator to achieve proficiency with distinct operations such as, but not limited to, foot switch settings that are based on actual surgical parameters and simulations. A display within the user interface of the surgical console 10 can provide feedback informing the operator of differences between his or her actual performance and a desired performance. These differences may be used to evaluate the operator's reaction time and provide guidance and feedback in order to improve the operator's use of the surgical console 10 and associated peripherals 14.

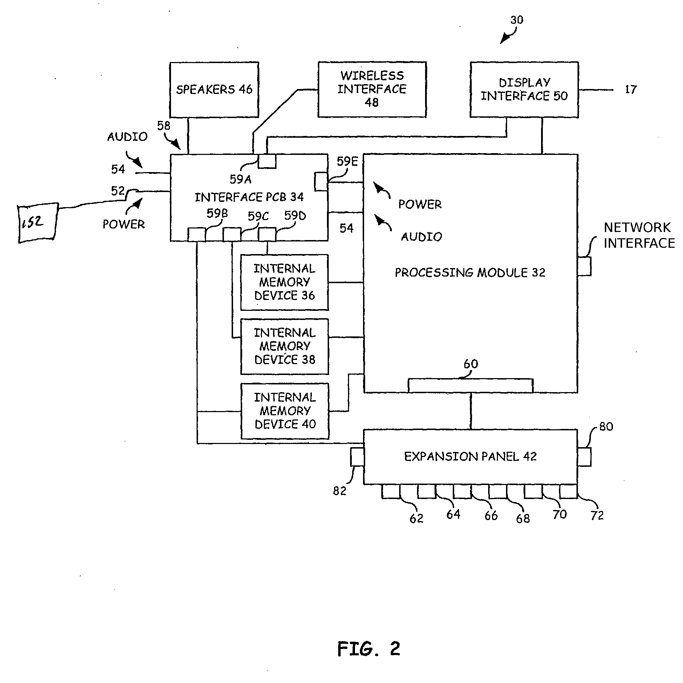

FIG. 2 is a simplified block diagram of various functional modules that may form part of surgical console 10. A surgical console 10 may functionally include a processing module 32, a power signal 52 provided to input-output (I/O) interface printed circuit board (PCB) 34, mass storage devices 36, 38, and 40, audio output (speaker(s)) 46, display port or connectors 50, expansion panel 42, and an external connection to audio inputs. Interface PCB 34 may include an audio output 58, a power output 59, and audio input 54. Interface PCB 34 couples to an external or internal power supply 152, which provides power signal 52. Interface PCB 34 can distribute power to various other functional elements of surgical console 10. For example, power may be distributed through connections 59A, 59B, 59C, 59D and 59E to processing system 32, mass storage devices 36-40, expansion panels 42, and other functional units within the surgical console 10 as required. Additionally, interface PCB 34 may receive audio signals through audio inputs 54, either from an external source or from a connection to processing module 32. Interface PCB 34 can route these audio inputs to audio output port 58 and speakers 46.

Mass storage devices 36-40 may comprise hard drives, DVD drives, CD drives, solid-state memory and other like storage devices as will be known to those having skill in the art. Interface PCB 34 supplies power to mass storage devices 36-40. The multimedia content or other information contained within mass storage devices 36-40 may be accessed through various interfaces to processing module 32 and routed to an appropriate playback portion of the surgical console 10 by interface PCB 34. For example, an audio signal may be routed to a speaker 46 in the case of a digital audio file such as an MP3 file, wave file or other like file, or a video or image content can be provided to display module 17. Thus, mass storage devices 36-40, or an external multi-media playback device such as, but not limited to, an MP3 player, may be coupled to the PCB interface 34 to provide audio and/or video signals to Interface PCB 34 which may then be processed by processing module 32 and presented using an appropriate playback means, such as speakers 46 or display module 17. Additionally, control devices such as a keyboard or mouse may be coupled to interface PCB 34 to control the playback of multi-media files. Alternatively, in some embodiments buttons 18 and knobs 20, which may have functions defined as presented in display 17, may be used to control the playback of the multi-media content stored in mass storage devices 36-40 or on externally connected devices.

The processing module 32 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, cache memory, and/or any device that stores digital information. Note that when the processing module 32 implements one or more of its functions via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry. The memory stores, and the processing module executes, operational instructions corresponding to at least some of the steps and/or functions illustrated in the FIGS.

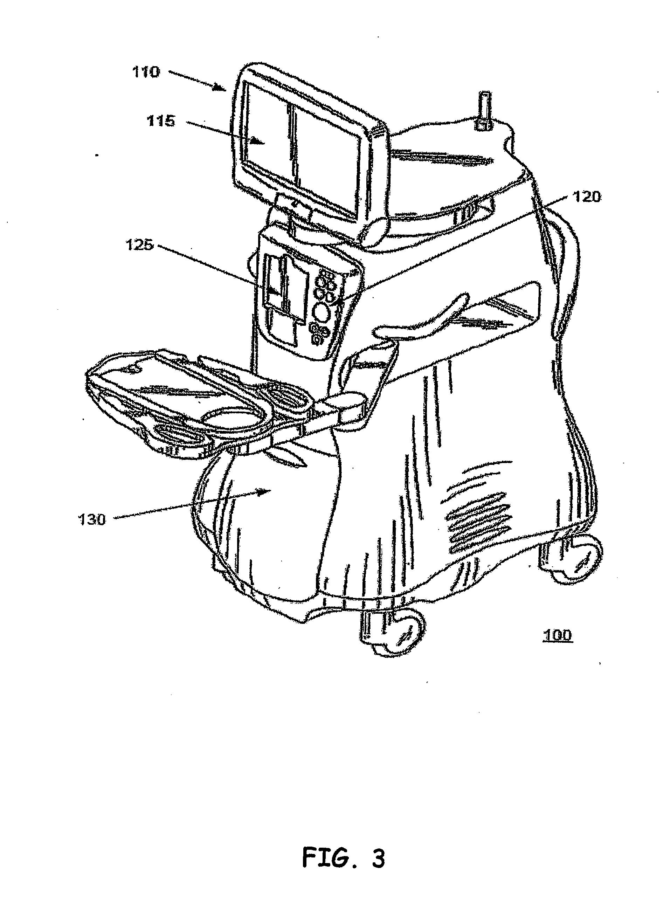

FIGs. 3-4 illustrate one example of a surgical system and a related consumable, in this case a cassette. These drawings exemplify a surgical environment in which embodiments of the present invention may be implemented. It can be seen from FIGs. 3-4 that a surgical console, such as surgical console 10, acts in cooperation with a number of consumables that require setup before a surgical procedure takes place. Embodiments of the present invention provide a system and method for facilitating surgical procedures with simulations of exercises that train the operator in the use of individual pieces of equipment or on the integrated surgical procedure.

Descriptions of known programming techniques, computer software, hardware, operating platforms and protocols may be omitted so as not to unnecessarily obscure the invention in detail. It should be understood, however, that the detailed description and the specific examples, while indicating the preferred embodiments of the invention, are given by way of illustration only and not by way of limitation. Various substitutions, modifications, additions and/or rearrangements within the spirit and/or scope of the underlying inventive concept will become apparent to those skilled in the art from this disclosure.

FIG. 3 is a diagrammatic representation of one embodiment of an ophthalmic surgical console 100. Surgical console 100 can include a swivel monitor 110 that has touch screen 115. Swivel monitor 110 can be positioned in a variety of orientations for whomever needs to see touch screen 115. Swivel monitor 110 can swing from side to side, as well as rotate and tilt. Touch screen 115 provides a graphical user interface ("GUI") that allows a user to interact with console 100.

Surgical console 100 also includes a connection panel 120 used to connect various tools and consumables to surgical console 100. Connection panel 120 can include, for example, a coagulation connector, balanced salt solution receiver, connectors for various hand pieces and a fluid management system ("FMS") or cassette receiver 125. Surgical console 100 can also include a variety of user friendly features, such as a foot pedal control (e.g., stored behind panel 130) and other features.

In operation, a cassette (not shown) can be placed in cassette receiver 125. Clamps in surgical console 100 clamp the cassette in place to minimize movement of the cassette during use. The clamps can clamp the top and bottom of the cassette, the sides of the cassette or otherwise clamp the cassette.

Surgical console 100 is provided by way of example and embodiments of the present invention can be implemented with a variety of surgical systems. Example surgical systems in which cassettes according to various embodiments of the present invention can be used include, for example, the Series 2000® Legacy® cataract surgical system, the Accurus® 400VS surgical system, and the Infiniti™ Vision System surgical system, all available from Alcon Laboratories Inc. of Fort Worth, Texas. Additionally, embodiments of the present invention can be used with a variety of surgical cassettes, examples of which are described in U.S. Pub. Nos. 2005/0186098 (Application No. 11/114,289 to Davis et al.), 2004/0253129 (Application No. 10/891,642 to Sorensen et al.), 2005/0065462 (Application No. 10/979,433 to Nazarifar et al.), 2003/0225363 (Application No. 10/156,175 to Gordon et al.), 2001/0016711 (Application No. 09/846,724 to Sorensen et al.) and United States Patent Nos. 6,293,926 to Sorensen et al., 4,493,695 to Cook, 4,627,833 to Cook, 4,395,258 to Wang et al., 4,713,051 to Steppe, et al., 4,758,238 to Sundblom et al., 4,790,816 to Sundblom et al., 6,036,458 to Cole et al., and 6,059,544 to Jung et al., each of which is hereby fully incorporated by reference herein. Embodiments of the present invention can be implemented for other suitable surgical systems and cassettes as would be understood by one of ordinary skill in the art.

Parts of the surgical procedure or an entire surgical procedure may be simulated on the console screen. This simulation may be directly integrated with the actual surgical instruments that the operator (doctor) uses to perform an actual surgery. For example, one exercise or simulation may focus on the use of the footswitch or pedal to set operating modes and parameters of various surgical instruments. Here the simulation may ask the user to achieve certain footswitch settings that are based on non-simulated surgical parameters and situations. The display (software) will give the user feedback as to how far the operator is from a desired value (e.g. cut-rate, vacuum level, etc.). The surgical console can also rank the operators reaction time and provide feedback for improved results. Constant visual and audio feedback can be used to evaluate (score) the user on precision and speed. Deductions may be enforced for slipping to parameters that are likely to cause damage in a real surgery.

Another example exercise may require the operator to maneuver an object through vitreous fluid inside a human eye. An infusion needle is simulated to insert a somewhat random amount of liquid into the eye. As the object maneuvers through regions of uncut vitreous, the operator will be challenged to adjust aspiration and cut-rate to keep the eye balanced. The object might also encounter particles that require a reflux action. In this way, an operator can exercise his or her footswitch skills.

Yet another exercise may present a picture of a retina with marked target spots for laser shots. A red aiming beam will be visible and will move between target spots. The aiming beam can be set to oscillate over and around the targets, simulating a typical shaking hand (or head). The challenge will be for the operator to predict this shaking and place the laser shot (e.g., by pressing the footswitch) as close as possible to the target. The aiming spot then moves to the next target. The operator will be rated by target accuracy and speed.

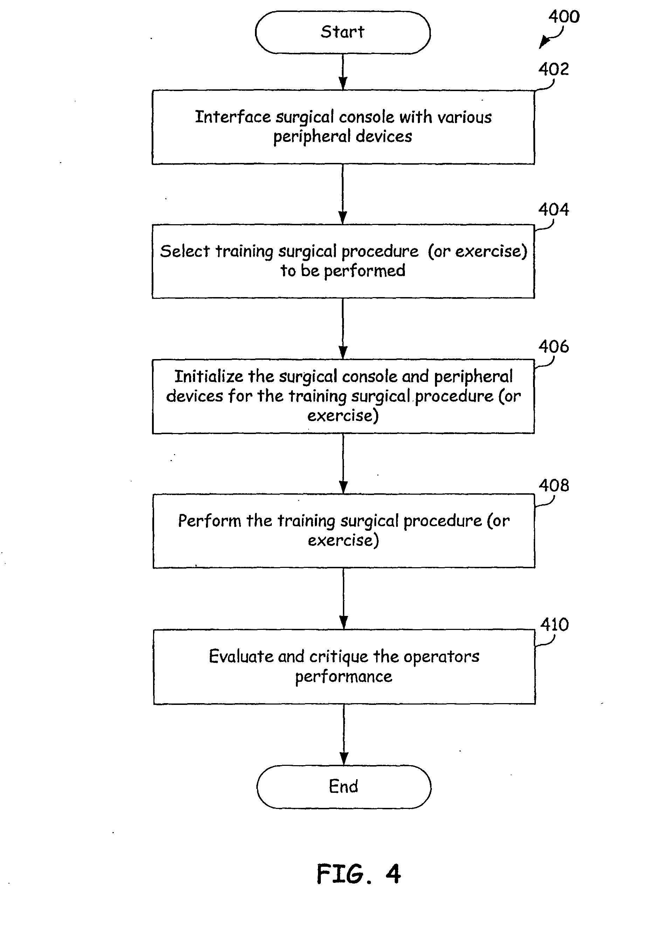

FIG. 4 provides a logic flow diagram associated with one embodiment of the present invention for the training of operators to use a surgical console and/or attached surgical instruments. Simulation 400 begins at step 402, where a surgical console may be interfaced with various peripheral devices. The peripheral devices, as stated above, may include training surgical instruments or actual surgical instruments that allow an operator to become familiar with the operation of actual equipment and improve his/her skills with the equipment by feedback from the surgical console. At step 404, a training surgical procedure or exercise to be performed is selected. At step 406, the surgical console and applicable peripheral devices are initialized for the training surgical procedure or exercise. At step 408, the operator performs the training surgical procedure or exercise. The surgical console may record and compare the operations performed by the operator to desired operations. Then, at step 410, based on this comparison the operator may be objectively critiqued on his/her performance. Embodiments of this invention thus allow for objective criticism and improvement of an operator.

The embodiment described above can be used to evaluate and critique the operator's performance (at step 410) by monitoring operating parameters and surgical modes associated with the procedure or exercise and comparing the monitored operating parameters and surgical modes with expected or desired operating parameters and surgical modes. A critique may occur after the surgical procedure or exercise is complete or may be based on the operator's performance. For example, if the user's performance falls below a certain threshold, the user may be alerted when an unfavorable and undesirable condition has occurred. This allows operators to be trained on the console/instrument features and how to control surgical instruments through the surgical consult in an efficient and pleasant way. Exercises may be formatted to provide the appearance of a game that creates competition between operators.

Existing surgical consoles do not offer the ability to provide training to operators in the manner described above. This is an important advantage compared to prior art surgical consoles.

In summary, embodiments of the present invention provide a training surgical console. This training surgical console may be utilized to simulate ocular or other surgical procedures. Simulation can thus be directly integrated and supported by the surgical console and training surgical instruments. The operator may use actual control hardware to manipulate the surgical instruments that will be manipulated during actual surgical procedures in order to improve the operator's surgical dexterity. This surgical console can include a processing module, an external interface, simulation module, and a user interface. The processing module can direct operation of peripheral devices coupled to the surgical console. The peripheral devices may include control devices, such as, but not limited to, footswitches or other like control devices, surgical instruments such as, but not limited to, surgical microscopes, and other surgical training instruments such as training surgical cutting tools. Additionally, the processing module may monitor the operating parameters and surgical modes associated with the training surgical procedure.

An external interface can couple the processing module to the surgical training instruments and other peripheral devices. The user interface allows the user operator to select and initialize the surgical console for the surgical training procedure. The operator may then perform the surgical training procedure where the operator will interface with the surgical console via the user interface as well as peripheral devices and training surgical instruments. The operator may receive feedback from the surgical console on their performance of the training surgical procedure. The feedback may be based on comparing operating parameters and surgical modes associated with the training surgical procedure to ideal or desired operating parameters and/or surgical modes associated with the training surgical procedure.

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled". As one of average skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

Although the present invention is described in detail, it should be understood that various changes, substitutions and alterations can be made hereto without departing from the spirit and scope of the invention as described by the appended claims.

## Claims

1. A surgical console (10, 100)_operably useable in both actual surgical procedures and simulated surgical procedures, comprising:
a processing module (32) operable to direct operations of and receive inputs from peripheral devices (14) operably coupled to the surgical console, wherein the peripheral devices comprise surgical instruments;
at least one memory device (24, 36, 38, 40) operably coupled to the processing module; and
a user interface (12, 17, 18, 20, 115), **characterized in that** the at least one memory device is operable to store a simulated training surgical procedure and multimedia content,
and **in that** the user interface is adapted to permit the user to initialize the surgical console for a training surgical procedure and select the training surgical procedure to be simulated;
and **in that** the processing module is adapted to perform the simulation and evaluation the operator's performance of the simulated training surgical procedure by providing feedback via the user interface informing the user of differences between his or her actual performance of the training surgical procedure and a desired performance.

2. The surgical console of claim 1, wherein stored simulated training procedures comprise variations of the training surgical procedure that may be selected as surgical complications.

3. The surgical console of claim 1 or claim 2, further comprising an external interface (34) operably coupled to the processing module (32), wherein the external interface is operable to interface the surgical console to the surgical instruments.

4. The surgical console of any one of claims 1 to 3, wherein the processing module (32) is operable to monitor operating parameters and surgical modes associated with the training surgical procedure.

5. The surgical console of claim 4, wherein the processing module (32) is operable to compare operating parameters and surgical modes associated with the training surgical procedure to desired operating parameters and/or surgical modes associated with the training surgical procedure.

6. The surgical console of any one of claims 1 to 5, wherein the user interface (12, 17, 18, 20, 115) is adapted to allow the operator to select simulation exercises that improve the operator's use and/or manual dexterity of surgical instruments and peripheral devices (14).

7. The surgical console of claim 6, wherein the surgical instruments (14) comprise a surgical microscope.

8. The surgical console of claim 7, further comprising a simulation module operable to visually simulate the training surgical procedure within the field of view of the surgical microscope.

9. The surgical console of claims 1 to 8, wherein the processing module (32) is operable to interrupt the simulation.

10. A computer-implemented method (400) for operating a surgical console (10, 100) operably useable in actual surgical procedures and to simulate a training surgical procedure, comprising the steps of:
interfacing (402) the surgical console with various peripheral devices, wherein the peripheral devices comprise surgical training instruments and simulation modules;
**characterized by**
storing a simulated training surgical procedure and multimedia content in a memory;
permitting a user to initialize (406) the surgical console for a simulated training surgical procedure and select the training surgical procedure to be simulated;
executing (408) the simulation; and
evaluating (410) the operator's performance of the simulated training surgical procedure by providing feedback via a user interface informing the user of differences between his or her actual performance of the training surgical procedure and a desired performance.

11. The method of claim 10, further comprising:
monitoring operating parameters and surgical modes associated with the training surgical procedure;
comparing the monitored operating parameters and surgical modes with expected operating parameters and surgical modes associated with the training surgical procedure; and
alerting the operator when the monitored operating parameters and surgical modes compare unfavorably to the expected operating parameters and surgical modes associated with the surgical procedure.

12. The method of claim 10, wherein the operating parameters and surgical modes associated with the surgical procedure(s) comprise a series of simulated surgical steps operable to:
alter operating modes of devices operably coupled to the surgical console (10, 100); or
alter peripheral device operating parameters of devices operably coupled to the surgical console.

13. The method of any of claims 10 to 12, wherein the operating perameters and surgical modes associated with the surgical procedure(s) comprise:
pneumatic and electronic parameters associated with surgical devices (14) operably coupled to the surgical console (10, 100).

14. The method of any of claims 10 to 13, wherein the simulated surgical procedure is an ophthalmic surgical procedure.

15. A computer program, which when executed on a computer performs the steps of any one of claims 10 to 14.

16. The computer program of claim 15, stored on a computer-readable medium.

## Patentansprüche

1. Chirurgische Konsole (10, 100), die sowohl in tatsächlichen chirurgischen Prozeduren wie auch in simulierten chirurgischen Prozeduren operativ verwendbar ist, aufweisend:
ein Prozessor-Modul (32), das zum Ausführen von Arbeitsabläufen betreibbar ist, sowie zur Entgegennahme von Eingaben von peripheren Vorrichtungen (14), die operativ an die chirurgische Konsole gekoppelt sind, wobei die peripheren Vorrichtungen chirurgische Instrumente umfassen;
mindestens eine Speichervorrichtung (24, 36, 38, 40), die operativ an das Prozessor-Modul gekoppelt ist; und
eine Anwenderschnittstelle (12, 17, 18, 20, 115), **dadurch gekennzeichnet, dass** die mindestens eine Speichervorrichtung betreibbar ist, um einen simulierten chirurgischen Trainingsablauf und einen Multimedia-Gehalt zu speichern, und dass die Anwenderschnittstelle dazu bestimmt ist, dem Anwender zu ermöglichen, die chirurgische Konsole für ein chirurgisches Trainingsverfahren zu initialisieren und das zu simulierende chirurgische Trainingsverfahren auszuwählen;
und dass das Prozessor-Modul dazu bestimmt ist, die Simulation auszuführen und eine Evaluierung der Durchführung des Anwenders des simulierten chirurgischen Trainingsverfahrens vorzunehmen, indem eine Rückmeldung über die Anwenderschnittstelle vorgesehen ist, mit der der Anwender auf Unterschiede zwischen seiner oder ihrer tatsächlichen Durchführung des chirurgischen Trainingsverfahren und einem gewünschten Verhalten informiert wird.

2. Chirurgische Konsole nach Anspruch 1, wobei die gespeicherten simulierten Trainingsabläufe Variationen des chirurgischen Trainingsablaufes umfassen, die als chirurgische Komplikationen ausgewählt werden können.

3. Chirurgische Konsole nach Anspruch 1 oder Anspruch 2, ferner aufweisend eine externe Schnittstelle (34), die operativ an das Prozessor-Modul (32) gekoppelt ist, wobei die externe Schnittstelle betreibbar ist, um die chirurgische Konsole an die chirurgischen Instrumente anzukoppeln.

4. Chirurgische Konsole nach einem der Ansprüche 1 - 3, wobei das Prozessor-Modul (32) betreibbar ist, um die Betriebsparameter und die chirurgischen Modi zu überwachen, die mit dem chirurgischen Trainingsverfahren assoziiert sind.

5. Chirurgische Konsole nach Anspruch 4, wobei das Prozessor-Modul (32) betreibbar ist, um Betriebsparameter und chirurgische Modi zu vergleichen, die mit dem chirurgischen Trainingsverfahren assoziierbar sind und zwar mit gewünschten Betriebsparametern, und/oder chirurgischen Modi, die mit dem chirurgischen Trainingsverfahren assoziiert sind.

6. Chirurgische Konsole nach einem der Ansprüche 1 - 5, wobei die Anwenderschnittstelle (12, 17, 18, 20, 115) dazu bestimmt ist, der Bedienperson die Auswahl von Simulations-Übungen zu gestatten, die die Anwendung der Bedienperson und/oder eine manuelle Geschicklichkeit von chirurgischen Instrumenten und peripheren Vorrichtungen (14) verbessern.

7. Chirurgische Konsole nach Anspruch 6, wobei die chirurgischen Instrumente (14) ein chirurgisches Mikroskop aufweisen.

8. Chirurgische Konsole nach Anspruch 7, ferner aufweisend einen Simulationsmodus, der zum visuellen Simulieren des chirurgischen Trainingsverfahrens innerhalb des Sichtfeldes des chirurgischen Mikroskops anwendbar ist.

9. Chirurgische Konsole nach den Ansprüchen 1 - 8, wobei das Prozessor-Modul (32) zur Unterbrechung der Simulation betreibbar ist.

10. Computerimplementiertes Verfahren (400) zum Betreiben einer chirurgischen Konsole (10, 100), die sowohl in tatsächlichen chirurgischen Verfahren als auch zur Simulierung eines chirurgischen Trainingsverfahrens betreibbar ist, umfassend die Schritte:
Ankoppeln (402) der chirurgischen Konsole an verschiedene periphere Vorrichtungen, wobei die peripheren Vorrichtungen chirurgische Trainingsinstrumente und Simulationsmodule umfassen;
**gekennzeichnet durch**
ein Abspeichern eines simulierten chirurgischen Trainingsablaufes und eines Multimediagehaltes in einem Speicher;
ein Ermöglichen eines Anwenders, die chirurgische Konsole für ein simuliertes chirurgisches Trainingsverfahren zu Initialisieren und ein Auswählen des zu simulierenden chirurgischen Trainingsverfahrens;
ein Ausführen (408) der Simulation; und
ein Evaluieren (410) der Ausführung der Bedienperson zum simulierten chirurgischen Trainingsverfahren **durch** Vorsehen einer Rückmeldung über eine Anwenderschnittstelle, die den Anwender über Unterschiede zwischen seiner oder ihrer tatsächlichen Durchführung des chirurgischen Trainingsverfahrens und einer gewünschten Handlungsweise informiert.

11. Verfahren nach Anspruch 10, ferner umfassend:
ein Überwachen von Betriebsparametern und chirurgischen Modi, die
mit dem chirurgischen Trainingsverfahren assoziiert sind;
ein Vergleichen der überwachten Betriebsparameter und chirurgischen Modi mit erwarteten Betriebsparametern und chirurgischen Modi, die mit dem chirurgischen Trainingsverfahren assoziiert sind;
und
ein Alarmieren des Ausführenden, wenn der Vergleich zwischen den überwachten Betriebsparametern und chirurgischen Modi mit den erwarteten Betriebsparametern und chirurgischen Modi, die mit dem chirurgischen Verfahren assoziiert sind, nachteilhaft sind.

12. Verfahren nach Anspruch 10, wobei die Betriebsparameter und chirurgischen Modi, die mit dem/den chirurgischen Verfahren assoziiert sind, eine Serie an simulierten chirurgischen Schritten umfassen, die anwendbar sind;
Verändern der Betriebsmodi von Vorrichtungen, die operativ an die chirurgische Konsole (10, 100) gekoppelt sind; oder
Ändern von Betriebsparametern von peripheren Vorrichtungen von Vorrichtungen, die operativ an die chirurgische Konsole gekoppelt sind.

13. Verfahren nach einem der Ansprüche 10 - 12, wobei die Betriebsparameter und chirurgischen Modi, die mit dem/den chirurgischen Verfahren assoziiert sind, umfassen:
pneumatische und elektronische Parameter, die mit den chirurgischen Vorrichtungen (14) assoziiert sind, die operativ an die chirurgische Konsole (10, 100) gekoppelt sind.

14. Verfahren nach einem der Ansprüche 10 - 13, wobei das simulierte chirurgische Verfahren ein ophthalmisches chirurgisches Verfahren ist.

15. Computerprogramm, das beim Ausführen auf einem Computer die Schritte von einem der Ansprüche 10 - 14 ausführt.

16. Computerprogramm nach Anspruch 15, gespeichert auf einem computerlesbaren Medium.

## Revendications

1. Console chirurgicale (10, 100) utilisable opérationnellement à la fois lors d'interventions chirurgicales réelles et lors d'interventions chirurgicales simulées, comprenant :
un module de traitement (32) utilisable pour diriger les opérations de dispositifs périphériques (14) couplés opérationnellement à la console chirurgicale et recevoir des entrées de ceux-ci, les dispositifs périphériques comprenant des instruments chirurgicaux ;
au moins un dispositif de mémoire (24, 36, 38, 40) couplé opérationnellement au module de traitement ; et
une interface utilisateur (12, 17, 18, 20, 115), **caractérisée en ce que** l'au moins un dispositif de mémoire est utilisable pour stocker une intervention chirurgicale d'entraînement simulée et un contenu multimédia,
et **en ce que** l'interface utilisateur est conçue pour permettre à l'utilisateur d'initialiser la console chirurgicale pour une intervention chirurgicale d'entraînement et de sélectionner l'intervention chirurgicale d'entraînement devant être simulée ;
et **en ce que** le module de traitement est conçu pour effectuer la simulation et l'évaluation de l'exécution par l'opérateur de l'intervention chirurgicale d'entraînement simulée en fournissant des rétro-informations via l'interface utilisateur informant l'utilisateur des différences entre sa manière d'exécuter réellement l'intervention chirurgicale d'entraînement et une exécution souhaitée.

2. Console chirurgicale selon la revendication 1, dans laquelle les interventions d'entraînement simulées stockées comprennent des variantes de l'intervention chirurgicale d'entraînement qui peuvent être sélectionnées comme des complications chirurgicales.

3. Console chirurgicale selon la revendication 1 ou la revendication 2, comprenant en outre une interface externe (34) couplée opérationnellement au module de traitement (32), dans laquelle l'interface externe est utilisable pour assurer l'interface entre la console chirurgicale et les instruments chirurgicaux.

4. Console chirurgicale selon l'une quelconque des revendications 1 à 3, dans laquelle le module de traitement (32) sert à surveiller les paramètres opérationnels et les modes chirurgicaux associés à l'intervention chirurgicale d'entraînement.

5. Console chirurgicale selon la revendication 4, dans laquelle le module de traitement (32) est utilisable pour comparer les paramètres opérationnels et les modes chirurgicaux associés à l'intervention chirurgicale d'entraînement aux paramètres opérationnels et/ou modes chirurgicaux souhaités associés à l'intervention chirurgicale d'entraînement.

6. Console chirurgicale selon l'une quelconque des revendications 1 à 5, dans laquelle l'interface utilisateur (12, 17, 18, 20, 115) est conçue pour permettre à l'opérateur de sélectionner des exercices de simulation qui améliorent la dextérité manuelle de l'opérateur et/ou son utilisation des instruments chirurgicaux et dispositifs périphériques (14).

7. Console chirurgicale selon la revendication 6, dans laquelle les instruments chirurgicaux (14) comprennent un microscope chirurgical.

8. Console chirurgicale selon la revendication 7, comprenant en outre un module de simulation utilisable pour simuler visuellement l'intervention chirurgicale d'entraînement dans le champ d'observation du microscope chirurgical.

9. Console chirurgicale selon les revendications 1 à 8, dans laquelle le module de traitement (32) est utilisable pour interrompre la simulation.

10. Procédé mis en oeuvre par ordinateur (400) pour faire fonctionner une console chirurgicale (10, 100) utilisable opérationnellement dans des interventions chirurgicales réelles et pour simuler une intervention chirurgicale d'entraînement, comprenant les étapes suivantes :
l'interfaçage (402) de la console chirurgicale avec divers dispositifs périphériques, les dispositifs périphériques comprenant des instruments d'entraînement et modules de simulation chirurgicaux ;
**caractérisé par**
le stockage d'une intervention chirurgicale d'entraînement simulée et d'un contenu multimédia dans une mémoire ;
l'autorisation donnée à un utilisateur d'initialiser (406) la console chirurgicale pour une intervention chirurgicale d'entraînement simulée et de sélectionner l'intervention chirurgicale d'entraînement devant être simulée ;
l'exécution (408) de la simulation ; et
l'évaluation (410) de l'exécution par l'opérateur de l'intervention chirurgicale d'entraînement simulée en fournissant des rétro-informations via une interface utilisateur informant l'utilisateur des différences entre sa manière d'exécuter réellement l'intervention chirurgicale d'entraînement et une exécution souhaitée.

11. Procédé selon la revendication 10, comprenant en outre :
la surveillance des paramètres opérationnels et des modes chirurgicaux associés à l'intervention chirurgicale d'entraînement ;
la comparaison des paramètres opérationnels et des modes chirurgicaux surveillés à des paramètres opérationnels et modes chirurgicaux escomptés associés à l'intervention chirurgicale d'entraînement ; et
l'avertissement de l'opérateur, lorsque la comparaison des paramètres opérationnels et modes chirurgicaux surveillés est défavorable par rapport aux paramètres opérationnels et modes chirurgicaux escomptés associés à l'intervention chirurgicale.

12. Procédé selon la revendication 10, dans lequel les paramètres opérationnels et modes chirurgicaux associés à l'intervention/aux interventions chirurgicale(s) comprennent une série d'étapes chirurgicales simulées utilisables pour :
modifier les modes opérationnels de dispositifs couplés opérationnellement à la console chirurgicale (10, 100) ; ou
modifier les paramètres opérationnels de dispositifs périphériques des dispositifs couplés opérationnellement à la console chirurgicale.

13. Procédé selon l'une quelconque des revendications 10 à 12, dans lequel les paramètres opérationnels et modes chirurgicaux associés à l'intervention/aux interventions chirurgicale(s) comprennent :
des paramètres pneumatiques et électroniques associés aux dispositifs chirurgicaux (14) couplés opérationnellement à la console chirurgicale (10, 100).

14. Procédé selon l'une quelconque des revendications 10 à 13, dans lequel l'intervention chirurgicale simulée est une intervention chirurgicale ophtalmique.

15. Programme informatique, qui, lorsqu'il est exécuté sur un ordinateur, réalise les étapes selon l'une quelconque des revendications 10 à 14.

16. Programme informatique selon la revendication 15, stocké sur un support lisible par ordinateur.
